# DEMANDE DE BREVET EUROPEEN

(11) **EP 1 492 380 A1**
(43) Date de publication de la demande: **29.12.2004**
(21) Numéro de dépôt: 04291566.0
(22) Date de dépôt: 21.06.2004
(51) Int. Cl.: H04Q 11/00, H04B 10/155

(54) **Dispositif de traitement des signaux optiques, configurable, à sources large bande**

(30) Priorité: 24.06.2003 FR 0307589
(71) Demandeur: ALCATEL, 75008 Paris (FR)
(72) Inventeur: Noirie, Ludovic, 91620 Nozay (FR)
(74) Mandataire: Fournier, Michel Robert Marie

(57) **Abrégé**

Un dispositif de traitement de signaux optiques comprend i) des moyens d'alimentation (S) comportant des sources délivrant chacune, sensiblement simultanément, des signaux optiques selon un peigne de longueurs d'onde d'au moins deux longueurs d'onde différentes ou un continuum de longueurs d'ondes, ii) des premiers moyens de multiplexage (M1) propres à délivrer sur au moins un port primaire (P1) un multiplex de canaux correspondant à des bandes passantes choisies, à partir de signaux optiques reçus sur des ports secondaires (E1) munis chacun de moyens de filtrage spectral sélectifs (F) propres à laisser passer les signaux optiques dont les longueurs d'onde appartiennent à l'une des bandes passantes correspondant à l'un des canaux du multiplex, et iii) des moyens d'aiguillage optique (A) chargés d'aiguiller les signaux optiques délivrés par les moyens d'alimentation (S) vers des ports secondaires (E1) des premiers moyens de multiplexage (M1), en fonction d'instructions.

## Description

L'invention concerne le domaine des dispositifs de traitement de signaux optiques, et plus particulièrement les dispositifs d'aiguillage de ressources (ou signaux optiques).

Les réseaux de communications optiques comporte généralement des noeuds optiques, comme par exemple des multiplexeurs optiques à insertion/extraction (ou OADM pour « Optical Add/Drop Multiplexer »), munis d'un dispositif de traitement chargé d'aiguiller (ou commuter) des ressources vers un autre noeud ou vers des terminaux ou des serveurs.

A cet effet, les dispositifs de traitement comprennent généralement des moyens d'alimentation, chargés de délivrer des signaux optiques, des moyens de multiplexage, chargés de délivrer sur au moins un port primaire un multiplex de canaux, correspondant à des bandes passantes choisies et comportant des signaux optiques reçus sur des ports secondaires, et des moyens d'aiguillage optique, chargés d'aiguiller, en fonction d'instructions, les signaux optiques délivrés par les moyens d'alimentation sélectivement vers des ports secondaires des premiers moyens de multiplexage.

On entend ici par « moyens de multiplexage » des multiplexeurs (monodirectionnels), des démultiplexeurs (monodirectionnels) et des multiplexeurs / démultiplexeurs (bidirectionnels). Par ailleurs, on entend ici par « port primaire » une entrée et/ou une sortie de moyens de multiplexage propre à délivrer et/ou à recevoir un multiplex. En outre, on entend ici par « port secondaire » une entrée et/ou une sortie de moyens de multiplexage propre à délivrer et/ou à recevoir des signaux optiques qui ne sont pas multiplexés.

Afin que les noeuds optiques soient (re)configurables, les moyens d'alimentation de leur dispositif de traitement comportent des sources constituées de lasers accordables en longueur d'onde. Or, ces lasers accordables requièrent des dispositifs de contrôle, par contre-réaction, de leur longueur d'onde de sortie, qui augmentent notablement le coût des sources.

L'invention a donc pour but de remédier à cet inconvénient.

Elle propose à cet effet un dispositif de traitement du type de celui présenté dans l'introduction, mais dans lequel, d'une part, les moyens d'alimentation comprennent des sources capables de délivrer chacune, sensiblement simultanément, des signaux optiques présentant une même modulation et portés par un peigne de longueurs d'onde, d'au moins deux longueurs d'onde différentes, ou bien portés par un continuum de longueurs d'onde, et d'autre part, chaque port secondaire des (premiers) moyens de multiplexage est pourvu de moyens de filtrage spectral sélectifs chargés de ne laisser passer que les signaux optiques qui présentent des longueurs d'onde appartenant à l'une des bandes passantes correspondant à l'un des canaux du multiplex.

En d'autres termes, on utilise des sources qui délivrent soit un « peigne » de longueurs d'onde (comme par exemple des lasers à mode bloqué, ou une barrette de lasers continus à différentes longueurs d'onde couplés à un multiplexeur), soit une lumière large bande (comme par exemple des diodes électroluminescentes (ou LEDs), des super LEDs, ou des amplificateurs optiques semi-conducteurs (ou SOA), et l'on procède à la sélection de la longueur d'onde désirée au niveau des moyens de multiplexage.

Ce dispositif de traitement peut comporter d'autres caractéristiques qui pourront être prises séparément ou en combinaison, et notamment :
- des premiers moyens de multiplexage pouvant recevoir un multiplex sur leur(s) port(s) primaire(s) et délivrer sur leurs ports secondaires les signaux optiques contenus dans le multiplex en fonction des bandes passantes auxquelles appartiennent leurs longueurs d'onde respectives. Dans ce cas, on prévoit également des moyens de réception chargés de recevoir des signaux optiques aiguillés par les moyens d'aiguillage, en fonction d'instructions, et provenant des ports secondaires des premiers moyens de multiplexage. Ces moyens de réception peuvent être subdivisés en modules de réception chargés de recevoir des signaux optiques qui peuvent être de longueurs d'onde quelconques,
- des seconds moyens de multiplexage comportant au moins un port primaire, chargé de recevoir un multiplex, et des ports secondaires couplés aux moyens d'aiguillage et comprenant également des moyens de filtrage spectral sélectifs ne laissant passer que les signaux optiques dont les longueurs d'onde appartiennent à l'une des bandes passantes correspondant à l'un des canaux du multiplex. Dans ce cas, les seconds moyens de multiplexage peuvent être également agencés pour délivrer sur leur(s) port(s) primaire(s) un multiplex contenant des signaux optiques aiguillés par les moyens d'aiguillage optique jusqu'à leurs ports secondaires,
- des moyens d'aiguillage chargés d'aiguiller vers les moyens de réception, en fonction d'instructions, certains des signaux optiques délivrés par les ports secondaires des seconds moyens de multiplexage,
- des moyens d'aiguillage chargés d'aiguiller, en fonction d'instructions, certains des signaux optiques délivrés par les ports secondaires des premiers (ou seconds) moyens de multiplexage vers les ports secondaires des seconds (ou premiers) moyens de multiplexage,
- des moyens de filtrage spectral sélectifs des premiers et/ou seconds moyens de multiplexage réalisés, par exemple, sous la forme de filtres à couches minces ou de séparateurs de longueur d'onde à réseau de guides d'onde (ou AWG pour « Array Waveguide Grating »).

Un dispositif de traitement selon l'invention peut avantageusement constituer un noeud optique à insertion/extraction de signaux optiques (de type OADM).

D'autres caractéristiques et avantages de l'invention apparaîtront à l'examen de la description détaillée ci-après, et des dessins annexés, sur lesquels :
- la figure 1 illustre de façon schématique un premier exemple de réalisation d'un dispositif de traitement selon l'invention, et
- la figure 2 illustre de façon schématique un second exemple de réalisation d'un dispositif de traitement selon l'invention agencé sous la forme d'un noeud optique à insertion/extraction de signaux optiques (de type OADM).
   Les dessins annexés pourront non seulement servir à compléter l'invention, mais aussi contribuer à sa définition, le cas échéant.
   L'invention a pour objet de permettre la (re)configuration d'un dispositif de traitement chargé d'aiguiller (ou de commuter) des signaux optiques.
   On se réfère tout d'abord à la figure 1 pour décrire un exemple de réalisation d'un dispositif de traitement selon l'invention, ci-après appelé noeud de commutation D.
   Un noeud de commutation D, selon l'invention, comprend au moins des moyens d'alimentation en signaux optiques, ci-après appelés sources S, chaque source ayant une bande passante optique large (recouvrant plusieurs
- au moins 2 - canaux du multiplex de sortie), des moyens d'aiguillage (ou de commutation) optique spatial(e), ci-après appelés module d'aiguillage A, et des premiers moyens de multiplexage, ci-après appelés multiplexeur M1-i. Dans cette configuration minimale, les moyens de multiplexage ne sont agencés que pour délivrer un multiplex sur un unique port de sortie. On entend ici par « multiplex » un ensemble de canaux correspondant à des bandes passantes choisies et contenant, pour certains d'entre eux, des signaux optiques.

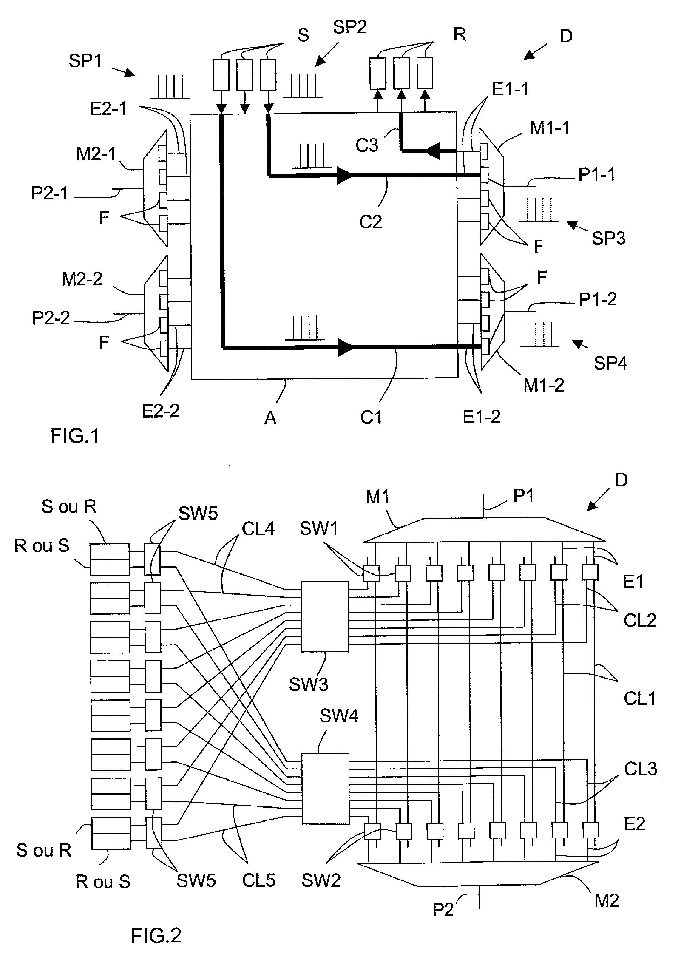

L'exemple illustré sur la figure 1 est beaucoup plus complet. Les premiers moyens de multiplexage comportent en effet deux multiplexeurs M1-i (i = 1, 2), ici de type 1x4 (un port primaire P1-i, destiné à être raccordé à une fibre optique, et quatre ports secondaires E1-i, raccordés au module d'aiguillage A). Par ailleurs, le noeud de commutation D comporte ici des seconds moyens de multiplexage constitués également de deux multiplexeurs M2-j (j = 1, 2), ici de type 1x4 (un port primaire P2-j, destiné à être raccordé à une fibre optique, et quatre ports secondaires E2-j, raccordés au module d'aiguillage A).

Dans ce qui suit on considère que tous les multiplexeurs M1-i et M2-j sont de type bidirectionnel, de manière à pouvoir chacun délivrer et recevoir un multiplex (c'est-à-dire assurer à la fois le multiplexage et le démultiplexage). Par conséquent, les ports primaires P1-i et P2-j sont des ports d'entrée ou de sortie, et les ports secondaires E1-i et E2-j sont également des ports d'entrée ou de sortie, suivant la configuration du système. Dans cette situation, il n'existe donc pas de différence entre les premiers M1-i et seconds M2-j multiplexeurs, qui constituent ensemble des moyens de multiplexage.

Bien entendu, on peut envisager des variantes dans lesquelles tous les multiplexeurs M1-i et M2-j sont de type monodirectionnel, les premiers multiplexeurs M1-i délivrant des multiplex (et agissant exclusivement en tant que multiplexeurs) et les seconds multiplexeurs M2-j recevant des multiplex (et agissant exclusivement en tant que démultiplexeurs), ou bien les premiers M1-i et les seconds M2-j multiplexeurs délivrant chacun des multiplex.

Lorsque le nombre de multiplexeurs est important, le module d'aiguillage A peut par exemple présenter une architecture multi-étages.

Les multiplexeurs M1-i et M2-j étant tous ici de type bidirectionnel, le noeud de commutation D comporte également des moyens de réception R chargés de recevoir des signaux optiques provenant des ports secondaires E des premiers M1-i ou seconds M2-j multiplexeurs, via le module d'aiguillage A.

Préférentiellement, comme illustré, les moyens de réception sont agencés sous la forme de modules de réception R chargés chacun de recevoir des signaux optiques présentant des longueurs d'onde quelconques.

Selon l'invention, chaque source S est chargée de délivrer, de façon sensiblement simultanée, des signaux optiques présentant au moins deux longueurs d'onde différentes.

On entend ici par « présentant au moins deux longueurs d'onde différentes », aussi bien le fait de présenter plusieurs longueurs d'onde espacées les unes des autres, que le fait de présenter une quasi infinité de longueurs d'onde (ou continuum de longueurs d'onde).

A cet effet, deux modes de réalisation peuvent être envisagés.

Dans un premier mode de réalisation, chaque source S est constituée, d'une part, de plusieurs (n, par exemple n = 4) lasers délivrant chacun en continu une longueur d'onde choisie, et d'autre part, d'un multiplexeur nx1 monodirectionnel muni de n entrées alimentées par les sorties des n lasers et délivrant sur une sortie, couplée au module d'aiguillage A, un « peigne » de n longueurs d'onde, du type de ceux référencés SP1 et SP2 sur la figure 1. Cette source porte l'information à transmettre soit par modulation directe en simultané avec les n lasers, soit par modulation externe du signal de sortie du multiplexeur monodirectionnel nx1. En variante, on peut utiliser un unique laser à mode bloqué (ou « mode locked »), qui délivre un signal multi-longueur d'onde. Dans ce cas, l'information à transmettre est modulée soit directement sur le laser à mode bloqué, soit par un modulateur externe en sortie du laser à mode bloqué.

Dans un second mode de réalisation, chaque source S est constituée d'un générateur de lumière large bande. Un tel générateur peut être par exemple une diode électroluminescente (ou LED) délivrant du « bruit » sous une puissance sensiblement constante. En variante, chaque générateur peut être une super diode électroluminescente (ou super LED). Dans une autre variante, chaque générateur peut être un amplificateur optique à semiconducteur (ou SOA pour « Semiconductor Optical Amplifier »). Dans ce second mode de réalisation, la source porte l'information à transmettre soit par modulation directe du générateur de lumière large bande, soit par modulation externe en sortie de ce générateur de lumière large bande.

Avec ces types de source S, les signaux optiques, qui alimentent le module d'aiguillage A et qui doivent être aiguillés par ce dernier vers l'un des multiplexeurs M1-i et M2-j, présentent les n longueurs d'onde du peigne ou bien sont étalés sur toute la largeur de la bande (ou du continuum), selon leur mode de réalisation.

Les sources S sont préférentiellement modulées à des débits binaires élevés, par exemple 2,5 Gbits/s.

Par ailleurs, il est important de noter que toutes les sources ne sont pas forcément du même type.

La sélection de la longueur d'onde désirée pour un canal donné, qui doit être multiplexé avec des canaux à d'autres longueurs d'onde afin de constituer un multiplex, s'effectue alors dans le multiplexeur M1-i ou M2-j qui reçoit les signaux optiques du module d'aiguillage A.

Plus précisément, selon l'invention, chaque port secondaire E de multiplexeur M est pourvu d'un filtre spectral sélectif F chargé de ne laisser passer que les signaux optiques qui présentent des longueurs d'onde appartenant à sa bande passante de filtrage spectral. Chaque bande passante de filtrage spectral correspond à l'un des canaux du multiplex. Ainsi, l'ensemble des ports secondaires E d'un multiplexeur M couvre l'ensemble des canaux du multiplex délivré (ou reçu) par ledit multiplexeur M.

En d'autres termes, chaque filtre spectral sélectif F laisse passer une partie des longueurs d'onde, présentées par les signaux optiques délivrés par les sources S, et appartenant à l'une des bandes passantes correspondant à l'un des canaux du multiplex.

Chaque filtre spectral F peut être par exemple réalisé sous la forme d'un filtre à couches minces (empilement de couches présentant des indices différents), également appelé filtre interférentiel. Ce type de filtre est avantageux car il permet d'assurer une isolation optique élevée entre les différents ports secondaires E. En variante, chaque filtre spectral F peut être par exemple réalisé sous la forme d'un séparateur de longueurs d'onde à réseau de guides d'onde, de type AWG (pour « Array Waveguide Grating »). Toute autre solution permettant de réaliser un multiplexage optique peut être utilisée.

Lorsque la source S délivre un peigne de longueurs d'onde, le filtrage consiste simplement en une sélection de longueur d'onde choisie (ou plus exactement de longueurs d'onde appartenant à une bande passante choisie). En revanche, lorsque la source S délivre les signaux optiques dans une bande large, le filtrage consiste à découper la bande en tranches (ou « spectral slicing »).

Il est important de noter que les filtres des différents multiplexeurs ne sont pas forcément du même type.

Dans l'exemple illustré sur la figure 1, la source S la plus à gauche délivre au module d'aiguillage un premier peigne de quatre longueurs d'onde (SP1), et la source S la plus à droite délivre au module d'aiguillage A un second peigne de quatre longueurs d'onde (SP2). Le module d'aiguillage A est ici momentanément configuré (en raison d'instructions reçues), d'une part, pour acheminer par un premier circuit C1 les signaux optiques du premier peigne SP1 sur le quatrième port secondaire E1-2 du multiplexeur M1-2, et d'autre part, pour acheminer par un second circuit C2 les signaux optiques du second peigne SP2 sur le deuxième port secondaire E1-1 du multiplexeur M1-1.

Lorsque le deuxième port secondaire E1-1 du multiplexeur M1-1 reçoit les signaux optiques du second circuit C2, il les transmet à son filtre spectral sélectif F qui ne laisse passer que ceux présentant une longueur d'onde correspondant au deuxième canal du multiplex, puis les signaux filtrés, destinés au deuxième canal, sont éventuellement multiplexés avec d'autres signaux optiques (provenant par exemple de l'un des multiplexeurs M2-j), et destinés aux trois autres canaux du multiplex, comme illustré par le spectre SP3 de la figure 1. De même, lorsque le quatrième port secondaire E2-1 du multiplexeur M1-2 reçoit les signaux optique du premier circuit C1, il les transmet à son filtre spectral F qui ne laisse passer que ceux présentant une longueur d'onde correspondant au quatrième canal du multiplex, puis les signaux filtrés, destinés au quatrième canal, sont éventuellement multiplexés avec d'autres signaux optiques (provenant par exemple de l'un des multiplexeurs M2-j), et destinés aux trois autres canaux du multiplex, comme illustré par le spectre SP4 de la figure 1.

Lorsque le noeud de commutation D comporte des modules de réception R, il peut extraire des signaux optiques contenus dans un multiplex reçu par l'un de ses ports primaires P1-i ou P2-j. Pour ce faire, les différents canaux du multiplex reçu sont transmis aux différents ports secondaires E du multiplexeur M récepteur, qui délivrent alors les signaux qu'ils contiennent au module d'aiguillage A. Par exemple, comme illustré sur la figure 1, le module d'aiguillage A est configuré (suite à des instructions) pour aiguiller les signaux optiques du premier port secondaire E1-1 du multiplexeur M1-1 vers le module de réception R central, via le troisième circuit C3, tandis que les signaux optiques appartenant aux autres canaux du multiplex sont aiguillés vers l'un des multiplexeurs M2-j, où ils sont multiplexés dans un nouveau multiplex avec d'autres signaux optiques délivrés par l'une des sources S.

On se réfère maintenant à la figure 2 pour décrire un autre exemple de dispositif selon l'invention agencé sous la forme d'un noeud optique à insertion/extraction de signaux optiques (de type OADM).

Dans cet exemple, le noeud optique D comprend tout d'abord deux multiplexeurs bidirectionnels M1 et M2 de type 1x8 (un port principal P1 ou P2 et huit ports secondaires E1 ou E2), chargés chacun de recevoir ou délivrer un multiplex de huit canaux.

Les huit ports secondaires E1 du multiplexeur M1 sont chacun raccordés à un premier module d'insertion/extraction SW1, de type 1×2. De même, les huit ports secondaires E2 du multiplexeur M2 sont chacun raccordés à un second module d'insertion/extraction SW2, également de type 1x2. Bien que cela n'apparaisse pas sur la figure 2, chaque port secondaire E1, E2 est équipé d'un filtre spectral sélectif F.

Chaque premier module d'insertion/extraction SW1 est raccordé à un second module d'insertion/extraction SW2 par un circuit de liaison CL1. Par ailleurs, les premiers modules d'insertion/extraction SW1 sont raccordés par un second circuit de liaison CL2 à un premier commutateur SW3, de type 8x8, et les seconds modules d'insertion/extraction SW2 sont raccordés par un troisième circuit de liaison CL3 à un second commutateur SW4, également de type 8x8.

Le premier commutateur SW3 est raccordé par huit circuits de liaison CL4 à huit commutateurs SW5, de type 2x2, et le second commutateur SW4 est raccordé par huit circuits de liaison CL5 aux huit commutateurs SW5.

Enfin, chaque commutateur SW5 est raccordé à une source S large bande ou délivrant un peigne et à un module de réception R.

Les éléments CL1 à CL5 et SW1 à SW5 constituent ici le module d'aiguillage A.

Les commutateurs SW5 peuvent être connectés de manière indifférente à deux sources S, deux récepteurs R, ou un récepteur R et une source S, indépendamment les uns des autres. Par ailleurs, comme cela est illustré sur la figure, les commutateurs SW5 peuvent être des commutateurs de type 2x2, mais certains d'entre eux peuvent être de type 1 x2.

Bien entendu, ce noeud optique peut faire l'objet de nombreuses variantes, notamment en termes de nombre et types de multiplexeurs et de nombre d'étages et de types de commutateurs.

Ce noeud de commutation D fonctionne de la même manière que celui décrit précédemment, en référence à la figure 1. Si l'on identifie les multiplexeurs/démultiplexeurs P1-1 et P1-2 de la figure 1 aux multiplexeurs/démultiplexeurs P1 et P2 de la figure 2, pour l'établissement d'un circuit de type C1 (resp. C2) il suffit de configurer, d'une première part, le commutateur SW5 correspondant à la source S pour diriger les signaux optiques de cette source S vers SW4 (resp. SW3), d'une deuxième part, le commutateur SW2 (resp. SW1) correspondant au port E2 (resp. E1) approprié pour connecter ce port vers le commutateur SW4 (resp. SW3), et d'une troisième part, le commutateur SW4 (resp. SW3) pour connecter le commutateur SW5 au commutateur SW2 (resp. SW1). Lors de ces connexions C1 (resp. C2), les signaux vont donc de la source S vers le multiplexeur/démultiplexeur P2 (resp. P1). La connexion de type C3 se fait de la même manière, excepté que le signal remonte du multiplexeur/démultiplexeur P1 ou P2 vers le commutateur SW5 et le récepteur R. Par ailleurs, pour des signaux en transit provenant de P1 (resp. P2) et allant vers P2 (resp. P1), il suffit de configurer les commutateurs E1 et E2 correspondant pour que le signal passe des ports E1 (resp. E2) correspondants vers les ports E2 (resp. E1) correspondants, par les liaisons CL1 correspondantes.

Il est important de noter que deux récepteurs (ou plus) peuvent être dédiés à la réception de signaux optiques présentant des longueurs d'onde identiques mais provenant de fibres optiques différentes.

L'invention ne se limite pas aux modes de réalisation de dispositif de traitement et de noeud optique décrits ci-avant, seulement à titre d'exemple, mais elle englobe toutes les variantes que pourra envisager l'homme de l'art dans le cadre des revendications ci-après.

## Revendications

1. Dispositif de traitement de signaux optiques (D), comportant des moyens d'alimentation (S) propres à délivrer des signaux optiques, des premiers moyens de multiplexage (M1) propres à délivrer sur au moins un port primaire (P1) un multiplex de canaux correspondant à des bandes passantes choisies, à partir de signaux optiques reçus sur des ports secondaires (E1), et des moyens d'aiguillage optique (A) propres à aiguiller lesdits signaux optiques délivrés par lesdits moyens d'alimentation (S) sélectivement vers des ports secondaires (E1) desdits premiers moyens de multiplexage (M1), en fonction d'instructions, **caractérisé en ce que** lesdits moyens d'alimentation (S) comprennent une multiplicité de sources propres chacune à délivrer sensiblement simultanément des signaux optiques présentant une même modulation et portés par des longueurs d'onde différentes, et **en ce que** chaque port secondaire (E1) desdits premiers moyens de multiplexage (M1) comprend des moyens de filtrage spectral sélectifs (F) propres à ne laisser passer qu'une partie associée des longueurs d'onde présentées par les signaux optiques délivrés par lesdits moyens d'alimentation (S), cette partie appartenant à l'une des bandes passantes correspondant à l'un des canaux dudit multiplex.

2. Dispositif de traitement selon la revendication 1, **caractérisé en ce que** certaines au moins desdites sources (S) comportent au moins deux lasers délivrant chacun une lumière d'une longueur d'onde choisie et un multiplexeur propre à délivrer une combinaison desdites lumières.

3. Dispositif de traitement selon l'une des revendications 1 et 2, **caractérisé en ce que** certaines au moins desdites sources (S) comportent un laser dit « à mode bloqué ».

4. Dispositif de traitement selon l'une des revendications 1 à 3, **caractérisé en ce que** certaines au moins desdites sources (S) comportent un générateur de lumière large bande.

5. Dispositif de traitement selon la revendication 4, **caractérisé en ce que** lesdits générateurs de lumière large bande sont choisis dans un groupe comprenant au moins les diodes électroluminescentes, les super diodes électroluminescentes et les amplificateurs optiques à semiconducteur.

6. Dispositif de traitement selon l'une des revendications 1 à 5, **caractérisé en ce que** lesdits premiers moyens de multiplexage (M1) sont propres à recevoir sur chaque port primaire (P1) un multiplex de canaux correspondant à des bandes passantes choisies et contenant des signaux optiques, et à délivrer sur lesdits ports secondaires (E1) lesdits signaux optiques en fonction des bandes passantes auxquelles appartiennent leurs longueurs d'onde respectives, **en ce qu'**il comprend des moyens de réception (R) propres à recevoir des signaux optiques, et **en ce que** lesdits moyens d'aiguillage (A) sont agencés pour aiguiller certains desdits signaux optiques délivrés par lesdits ports secondaires (E1) des premiers moyens de multiplexage (M1) vers lesdits moyens de réception (R), en fonction d'instructions.

7. Dispositif de traitement selon la revendication 6, **caractérisé en ce que** lesdits moyens de réception (R) comportent au moins deux modules de réception propres à recevoir des signaux optiques de longueurs d'onde quelconques.

8. Dispositif de traitement selon l'une des revendications 1 à 7, **caractérisé en ce qu'**il comprend des seconds moyens de multiplexage (M2) comportant au moins un port primaire (P2), propre à recevoir un multiplex de canaux correspondant à des bandes passantes choisies et contenant des signaux optiques, et des ports secondaires (E2) couplés auxdits moyens d'aiguillage (A) et comprenant des moyens de filtrage spectral sélectifs (F) propres à laisser passer les signaux optiques dont les longueurs d'onde appartiennent à l'une des bandes passantes correspondant à l'un des canaux dudit multiplex.

9. Dispositif de traitement selon la revendication 8, **caractérisé en ce que** lesdits seconds moyens de multiplexage (M2) sont propres à délivrer sur chaque port primaire (P2) un multiplex de canaux correspondant à des bandes passantes choisies et contenant des signaux optiques reçus desdits moyens d'aiguillage optique sur ses ports secondaires (E2).

10. Dispositif de traitement selon l'une des revendications 8 et 9, **caractérisé en ce que** lesdits moyens d'aiguillage (A) sont agencés pour aiguiller certains desdits signaux optiques délivrés par lesdits ports secondaires (E2) des seconds moyens de multiplexage (M2) vers lesdits moyens de réception (R), en fonction d'instructions.

11. Dispositif de traitement selon l'une des revendications 8 à 10, **caractérisé en ce que** lesdits moyens d'aiguillage (A) sont agencés pour aiguiller certains desdits signaux optiques délivrés par lesdits ports secondaires (E1, E2) des premiers (M1), respectivement seconds (M2), moyens de multiplexage vers lesdits ports secondaires (E2, E1) des seconds (M2), respectivement premiers (M1), moyens de multiplexage, en fonction d'instructions.

12. Dispositif de traitement selon l'une des revendications 1 à 11, **caractérisé en ce que** lesdits moyens de filtrage spectral sélectifs (F) des premiers (M1) et/ou seconds (M2) moyens de multiplexage sont choisis dans un groupe comprenant au moins les filtres à couches minces et les séparateurs de longueur d'onde à réseau de guides d'onde (« AWG »).
